# EUROPEAN PATENT APPLICATION

(11) **EP 4 269 978 A1**
(43) Date of publication of application: **01.11.2023**
(21) Application number: 21914941.6
(22) Date of filing: 08.07.2021
(51) Int. Cl.: G01M 17/007, G01M 17/02, B60C 19/00

(54) **VEHICLE CONTROL DEVICE, VEHICLE CONTROL METHOD, AND TIRE TESTING SYSTEM**

(30) Priority: 28.12.2020 JP 2020219337
(71) Applicant: BRIDGESTONE CORPORATION, Chuo-ku Tokyo 104-8340 (JP)
(72) Inventor: MORI Ryosuke, Tokyo 104-8340 (JP)
(74) Representative: Marks & Clerk LLP
(86) International application number: PCT/JP2021/025865
(87) International publication number: WO 2022/145080

(57) **Abstract**

The vehicle control device 100 according to this disclosure comprises a controller 10 to which at least one of information on the tires 7, information on a road surface of the course 200, and alignment information of the vehicle 1 is input, and controls at least one of a first control value, which is a control value of speed of the vehicle 1 according to a target travel speed of the vehicle 1, and a second control value, which is a control value of steering angle of the vehicle 1 according to a target travel path of the vehicle 1, based on the input information.

## Description

### TECHNICAL FIELD

This disclosure relates to a vehicle control device, a vehicle control method, and a tire testing system.

### BACKGROUND

Conventionally, the bench test method and the actual vehicle test method are known as tire testing methods. The bench test method, for example, includes the way in which the pseudo surface of a drum is brought into contact with the tire and the noise emitted by the tire is measured while the drum is rotating (see PTL 1). On the other hand, in the actual vehicle test method, various tests are conducted while the vehicle is actually driven along a lap course dedicated for testing.

### CITATION LIST

### Patent Literature

PTL 1: 2013-134213 A

### SUMMARY

### (Technical Problem)

In recent years, in the actual vehicle tests for tires described above, tires are mounted on vehicles equipped with automatic driving functions and the vehicles are driven around a course for testing to obtain test data. In testing tires, if the tires become worn in a way that affects the evaluation of tire performance, it is impossible to conduct the test properly, and work such as replacing the worn tires is necessary. Such work leads to a decrease in the efficiency of tire testing. Therefore, in actual vehicle tests using vehicles equipped with the automatic driving function described above, the vehicle controls that can reduce the load on tires and improve the efficiency of tire testing are required.

The object of this disclosure, made in view of the above problems, is to provide a vehicle control device, a vehicle control method, and a tire testing system that can suppress the load growth on tires in tire testing and improve the efficiency of tire testing.

### (Solution to Problem)

The vehicle control device according to one aspect of this disclosure is a vehicle control device for controlling a vehicle equipped with tires and driving automatically on a course, comprising a controller to which at least one of information on the tires, information on a road surface of the course, and alignment information of the vehicle is input, and controls at least one of a first control value, which is a control value of speed of the vehicle according to a target travel speed of the vehicle, and a second control value, which is a control value of steering angle of the vehicle according to a target travel path of the vehicle, based on the input information.

The vehicle control method according to one aspect of this disclosure is a vehicle control method for controlling a vehicle equipped with tires and driving automatically on a course, comprising the step of accepting input of at least one of information on the tires, information on a road surface of the course, and alignment information of the vehicle, and controlling at least one of a first control value, which is a control value of speed of the vehicle according to a target travel speed of the vehicle, and a second control value, which is a control value of steering angle of the vehicle according to a target travel path of the vehicle, based on the input information.

The tire testing system according to one aspect of this disclosure comprises a vehicle control device for controlling a vehicle equipped with tires and driving automatically on a course, and an information input device for inputting at least one of information on the tires, information on a road surface of the course, and alignment information of the vehicle, to the vehicle control device. The vehicle control device comprises a controller to which at least one of information on the tires, information on a road surface of the course, and alignment information of the vehicle is input from the information input device, and controls at least one of a first control value, which is a control value of speed of the vehicle according to a target travel speed of the vehicle, and a second control value, which is a control value of steering angle of the vehicle according to a target travel path of the vehicle, based on the input information.

### (Advantageous Effect)

This disclosure provides a vehicle control device, a vehicle control method, and a tire testing system that can suppress the load growth on tires in tire testing and improve the efficiency of tire testing.

### BRIEF DESCRIPTION OF THE DRAWINGS

In the accompanying drawings:
FIG. 1 is a block diagram illustrating an example configuration of a vehicle equipped with a vehicle control device according to one embodiment of this disclosure;
FIG.2 is a plan view of an example course on which the vehicle illustrated in Figure 1 travels;
FIG.3 is a flowchart illustrating an example operation of the vehicle control device illustrated in Figure 1; and
FIG.4 illustrates an example configuration of a tire testing system that obtains test data for tires mounted on the vehicle illustrated in Figure 1.

### DETAILED DESCRIPTION

The following is an illustrative description of this disclosure with reference to the drawings. In each figure, identical symbols indicate the same or equivalent components.

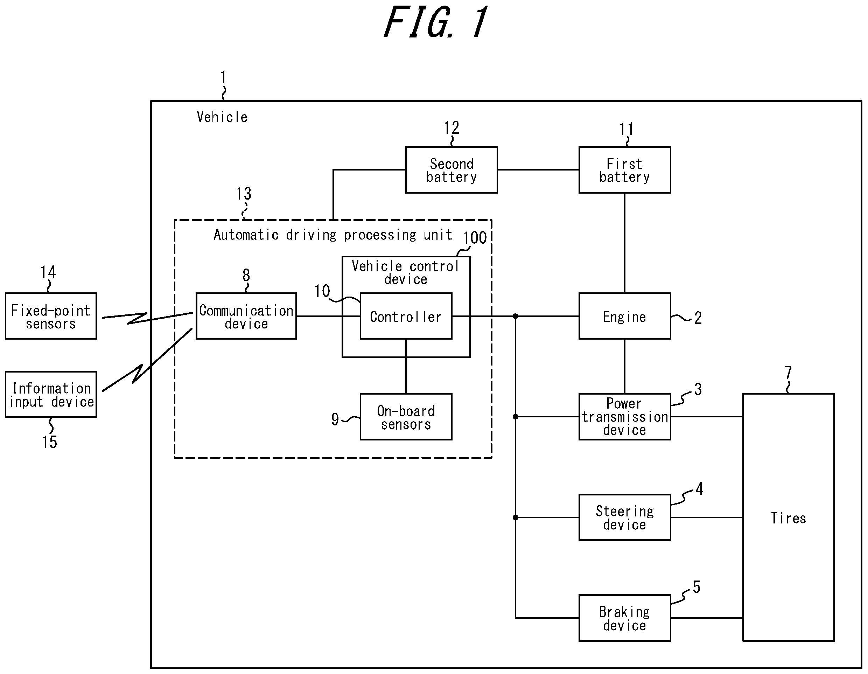

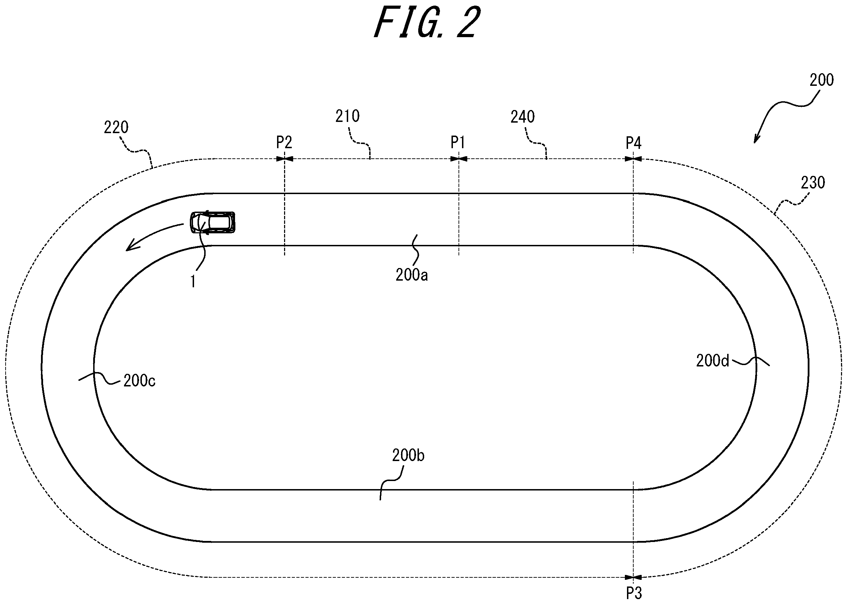

Figure 1 is a block diagram illustrating an example configuration of a vehicle 1 equipped with a vehicle control device 100 according to one embodiment of this disclosure. The vehicle control device 100 according to this embodiment controls a vehicle 1 equipped with tires 7 and an automatic driving function, and causes the vehicle 1 to drive automatically on a course 200, as illustrated in Figure 2, for testing the tires 7. Details of the course 200 are described below.

As illustrated in Figure 1, vehicle 1 is equipped with an engine 2, a power transmission device 3, a steering device 4, a braking device 5, tires 7, a communication device 8, on-board sensors 9, a controller 10, a first battery 11, and a second battery 12. The controller 10 constitutes the vehicle control device 100. The communication device 8, on-board sensors 9, and controller 10 (vehicle control device 100) constitute the automatic driving processing unit 13 that provides the automatic driving functions for the vehicle 1. The configuration of the automatic driving processing unit 13 is not limited to the configuration illustrated in Figure 1, instead may include various configurations to provide automatic driving functions for the vehicle 1.

The engine 2 is the power source that drives the vehicle 1. The engine 2 is driven by the power supplied from the first battery 11. The vehicle 1 may be equipped with a motor instead of the engine 2 as a power source. The vehicle 1 may also be equipped with both of an engine 2 and a motor as a power source.

The power transmission device 3 transmits the power generated by the engine 2 to the tires 7. The power transmission device 3 includes a transmission or the like.

The steering device 4 controls the steering angle of the tires 7. The steering device 4 includes a steering wheel or the like.

The braking device 5 brakes the tires 7. The braking device 5 includes a brake or the like.

The communication device 8 includes a communication module capable of wireless communication. The communication device 8 may include, for example, communication modules compatible with mobile communication standards such as 4G (4th Generation) and 5G (5th Generation). The communication device 8 communicates via a communication interface with the fixed-point sensors 14 located around the course 200 on which the vehicle travels. The fixed-point sensors 14 mainly detect the information on the course 200. The information on the course 200 may include information about conditions on the course 200 (e.g., the presence or absence of objects such as other vehicles or obstacles). The fixed-point sensors 14 may include, for example, a 3D-LiDAR (Light Detection and Ranging) sensor that emits electromagnetic waves, such as infrared or millimeter waves, and detects the reflected waves of the electromagnetic waves reflected by surrounding objects, thereby detecting those surrounding objects and the distance to those in three dimensions. The communication device 8 receives the information on the course 200 detected by the fixed-point sensors 14 and outputs the received information on the course 200 to the controller 10.

The communication device 8 includes a communication module capable of wired or wireless communication with an external information input device 15. The information input device 15 is, for example, a server device, PC (Personal Computer), tablet terminal, etc. connected to the vehicle 1 via a network. The information input device 15 is used to input at least one of the following: information on the tires 7 mounted on the vehicle 1, information on the road surface of the course 200 on which the vehicle 1 travels, and alignment information of the vehicle 1. The information on the tires 7 is, for example, information obtained through single-wheel testing of tires 7 and is information about the performance of tires 7. The information on the road surface of the course 200 is information about the condition of the road surface of the course 200, for example, the roughness of the road surface, the wetness of the road surface, and so on. The alignment information of the vehicle 1 is, for example, information about the mounting angle of the tires 7 on the vehicle 1. The communication device 8 receives, via the communication module, at least one of the information on the tires 7 mounted on the vehicle 1 and the road surface of the course 200 on which the vehicle 1 travels, from the information input device 15. The communication device 8 outputs the information received from information input device 15 to the controller 10.

The on-board sensors 9 mainly detect information about the vehicle 1 on which the on-board sensors 9 are mounted. The information detected by the on-board sensors 9 may include information on the status of the vehicle 1, such as the position or speed of the vehicle 1. The information detected by the on-board sensors 9 may include information on the conditions around the vehicle 1. The on-board sensors 9 may acquire the information from various meters on the vehicle 1, such as speed meters, tachometers, fuel meters, or mileage meters. The on-board sensors 9 may include GPS sensors that use a positioning system such as the Global Positioning System (GPS) to detect the position of the vehicle 1. The on-board sensors 9 may include speed sensors that use GPS to detect the speed of the vehicle 1. On-board sensors 9 may include cameras, such as monochrome or stereo cameras, that capture images of the area around the vehicle 1. The on-board sensors 9 may include LiDAR sensors. The on-board sensors 9 output the detected information on the vehicle 1 to the controller 10.

The controller 10 is one or more processors. The processor can be a general-purpose processor such as a central processing unit (CPU) or a dedicated processor specialized for a particular process. The controller 10 may include one or more dedicated circuits. One or more processors may be replaced by one or more dedicated circuits in the controller 10. For example, an FPGA (Field-Programmable Gate Array) or ASIC (Application Specific Integrated Circuit) can be used as a dedicated circuit.

The controller 10 controls the engine 2, the power transmission device 3, the steering device 4, and the braking device 5, and thereby controls the behavior of the vehicle 1 in automatic driving. Automation levels may be, for example, Level 3-5 as defined by the SAE (Society of Automotive Engineering).

The controller 10 acquires detection results from all or some of the on-board sensors 9 and fixed-point sensors 14, and detects the position of the vehicle 1 and obstacles around the vehicle 1 based on the acquired detection results. The controller 10 controls the travel of the vehicle 1 based on the detection results regarding the position of the vehicle 1 and obstacles around the vehicle 1.

The controller 10 controls the behavior of the vehicle 1 based on at least one of the following information output from the communication device 8: information on the tires 7, information on the road surface of the course 200, and alignment information of the vehicle 1. The controller 10 may receive at least one of the following information directly from the information input device 15, without going through the communication device 8: information on the tires 7, information on the road surface of the course 200, and alignment information of the vehicle 1. The details how the controller 10 controls the behavior of the vehicle 1 are described below.

The first battery 11 as the first power source is a secondary battery, for example, a lead-acid battery or a lithium-ion battery. The first battery 11 supplies power to the engine 2 (and/or motor) of the vehicle 1 to drive the engine 2 (and/or motor). The first battery 11 stops operation, for example, when the vehicle 1 is driven inertially for the pass-by noise test described below. When the first battery 11 stops operation, the power source of the vehicle 1 stops operating, and the vehicle 1 travels inertially with the power source stopped (hereinafter referred to as "ignition-off state"). The first battery 11 may charge the second battery 12 if the second battery 12 is a secondary battery. The first battery 11 may supply power to various electrical or electronic devices installed in the vehicle 1.

The second battery 12 as the second power source is a secondary battery, for example, a lead-acid battery or a lithium-ion battery. The second battery 12 may be a primary battery. The second battery 12 supplies power to the automatic driving processing unit 13. The second battery 12 supplies power to the automatic driving processing unit 13 in a state which power is supplied from the first battery 11 to the power source and the power source driven (hereinafter referred to as "ignition-on state"). Furthermore, the second battery 12 supplies power to the automatic driving processing unit 13 even with the ignition-off state. The second battery 12 supplies power to the automatic driving processing unit 13, allowing the automatic driving processing unit 13 to drive the vehicle 1 automatically not only in the ignition-on state, but also in the ignition-off state.

In testing tires 7, vehicle 1 is typically driven around a course 200. Therefore, it is necessary to transition the vehicle 1 to the ignition-on state after the predetermined measurement is made in the ignition-off state. The second battery 12 supplies power to the first battery 11 to activate the first battery 11 when the vehicle 1 is transitioned from the ignition-off state to the ignition-on state. The first battery 11, when activated by the second battery 12, powers and drives the power source of the vehicle 1, causing the vehicle 1 to transition to the ignition-on state.

As described above, the vehicle 1 travels automatically on the course 200 by the automatic driving function. The course 200 is, for example, a course for testing tires 7. Figure 2 is a plan view of an example of a course 200 on which vehicle 1 travels for testing tires 7.

As illustrated in Figure 2, the course 200 is a closed circular course consisting of two straight tracks 200a, 200b extending parallel to each other, and semicircular curved tracks 200c, 200d located at both ends of the straight tracks 200a, 200b and connect the ends of both straight tracks 200a, 200b. The vehicle 1 travels around the course 200, a circular course, in a predetermined direction (leftward in Figure 2).

The course 200 may be divided into several sections. For example, the course 200 includes a test section 210 that starts at position P1 and ends at position P2. The positions P1 and P2 are included in the straight track 200a. Therefore, the test section 210 is a straight section. The test section 210 is a section for performing various measurements related to testing tires 7. One test of tires 7 is, for example, the pass-by noise test described above. The pass-by noise test is conducted in accordance with prescribed standards for tire testing (e.g., ECE R1 17-02, the international standard for tire noise regulation). The road surface in the test section 210 may be a road surface based on the ISO 10844 standard. As described above, in the pass-by noise test, the vehicle 1 enters the ignition-off state with the power source stopped before the test section 210 and travels inertially through the test section 210 so that the travel noise of the vehicle 1 does not include the driving noise of the power source of the vehicle 1. Once the vehicle 1 has passed through the test section 210, it transitions from the ignition-off state to the ignition-on state. The fact that the vehicle 1 has passed through the test section 210 can be detected, for example, by the location information of the vehicle 1. The testing of tires 7 is not limited to the pass-by noise test, instead may be other tests.

In the case of a pass-by noise test, microphones are placed on both sides of the road surface in the width direction of the test section 210, and the vehicle 1 travels at a pre-determined speed in the center of the road surface of the test section 210. Microphones located on both sides of the road surface each detect the noise level of the driving noise of the vehicle 1 while the vehicle 1 is traveling on the test section 210, and acquire the noise level as test data for the tires 7.

Course 200 further includes an adjustment section 220, a banked section 230, and an acceleration section 240.

The adjustment section 220 is a section that starts at position P2 and ends at position P3. Position P3 is the location where straight track 200b and curved track 200d are connected. The adjustment section 220 is the section including a section after the test section 210 of the straight track 220a, curved track 220c, and straight track 200b. In other words, the adjustment section 220 is the section connected to the end of the test section 210 and the beginning of the banked section 230, which is described below. In the adjustment section 220, the vehicle 1 is permitted to overtake other vehicles and other vehicles are also permitted to overtake the vehicle 1. In the adjustment section 220, the order of vehicles entering the test section 210, etc., is adjusted.

The banked section 230 is a section that starts at position P3 and ends at position P4. The position P4 is the location where the straight track 200a and the curved track 200d are connected. The banked section 230, for example, is sloped such that the road surface is getting higher from the inner circumference to the outer circumference of the curve. That is, the course 200 includes a banked section 230 that has a curve shape, and the road surface thereof slopes from the inner circumference to the outer circumference of the curve. Due to this inclination, the vehicle 1 maintains a constant speed (e.g., 60 km/h) in the banked section 230 by driving on the outside of the semicircular corners and using centrifugal force.

In the banked section 230, the vehicle is required to maintain a relatively high speed despite the restricted field of view from the vehicle 1 due to its shape. Therefore, for safety reasons, only one car may travel on the banked section 230. Thus, while one vehicle is traveling on the banked section 230, other vehicles may be controlled to wait to enter the banked section 230, by slowing and stopping etc. in the adjustment section 220 before the banked section 230.

The acceleration section 240 is a section that starts at position P4 and ends at position P1. In other words, the acceleration section 240 is a section connected to the starting point (position P1) of the test section 210. The distance of the acceleration section 240 is determined according to the speed required to test tires 7 in the test section 210, the type of tires 7 mounted on the vehicle 1, the load of vehicle 1, and the acceleration performance of the vehicle 1. In the acceleration section 240, the controller 10 accelerates vehicle 1 to the speed required for entry into the test section 210, for example, at a predetermined acceleration rate.

Next, the behavioral control of the vehicle 1 by the controller 10 is described below.

The controller 10 detects the speed and position of the vehicle 1 based on the detection results of the on-board sensors 9 and the fixed-point sensors 14. The controller 10 controls the behavior of the vehicle 1 so that the detected speed and position of the vehicle 1 follow a driving scenario that defines the speed and path of the vehicle 1 in testing tires 7.

Specifically, the controller 10 calculates a control value (first control value) to control the acceleration and deceleration of the vehicle 1 and controls the acceleration and deceleration of the vehicle 1 according to the calculated first control value, so that the speed of the vehicle 1 follows the target travel speed of the vehicle 1 specified in the travel scenario. In other words, the controller 10 generates a first control value, which is a control value of speed of the vehicle 1 according to the target travel speed of the vehicle 1 and controls the speed of the vehicle 1 based on the generated first control value.

The controller 10 calculates a control value (second control value) of the steering angle of the vehicle 1 and controls the steering angle of the vehicle 1 according to the calculated second control value, so that the travel path (position) of the vehicle 1 follows the target travel path of the vehicle 1 defined in the travel scenario. In other words, the controller 10 generates a second control value, which is a control value of the steering angle of the vehicle 1 according to the target travel path of the vehicle 1 and controls the steering angle of the vehicle 1 based on the generated second control value.

In this embodiment, the controller 10 receives at least one of the following inputs from the information input device 15: information on the tires 7, information on the road surface of the course 200, and alignment information of the vehicle 1, and controls at least one of the first and second control values based on the information input from the information input device 15. In this way, the driving of the vehicle 1 can be controlled according to the performance of the tires 7, the condition of the road surface of the course 200, and the alignment information of the vehicle 1, thus the load growth on the tires 7 in tire testing can be suppressed. As a result, it reduces the time and effort required to replace tires 7 due to wear and improves the efficiency of tire testing.

In the following, the operation of the controller 10 is described with specific examples.

The controller 10 controls the first control value, for example, based on the information on the tires 7 input from the information input device 15 so that the speed of the vehicle 1 does not exceed the target travel speed of the vehicle 1. The following describes an example in which the Rolling Resistance Coefficient (RRC) value of the tires 7 is used as information on the tires 7 and the acceleration of the vehicle 1 is controlled as the first control value.

The RRC value is the ratio of rolling resistance (energy lost by the tires 7 during driving) to the specific gravity of the tires 7. The smaller the RRC value, the easier it is for the tires 7 to roll toward the travel direction of the vehicle 1 and the more responsive it is to the acceleration of the vehicle 1. Therefore, when the vehicle 1 is accelerated based on the same first control value for the tires 7 with small RRC value and the tires 7 with large RRC value, the speed of the vehicle 1 may increase too much when the RRC value of the tires 7 is small and exceed the target travel speed. When the speed of the vehicle 1 exceeds the target travel speed, some controls need to be applied to reduce the speed of the vehicle 1. Such a large variation in the speed of the vehicle 1 with respect to the target travel speed and the repeated control of increasing and decreasing the speed of the vehicle 1 will increase the load on the tires 7.

Therefore, the controller 10 controls the first control value so that the speed of the vehicle 1 does not exceed the target travel speed of the vehicle 1. For example, when accelerating the vehicle 1 from speed A to speed B, the controller 10 reduces the acceleration of vehicle 1 having RRC value less than a predetermined threshold than the acceleration of vehicle 1 having RRC value equal or more than the predetermined threshold. In this way, it is less likely that the speed of the vehicle 1 will increase too much and exceed the target travel speed when the RRC value is small. As a result, the fluctuations of the vehicle 1 with respect to the target travel speed can be suppressed, and the load growth on the tires 7 can also be suppressed.

The controller 10 controls the second control value, for example, based on the information on the tires 7 input from the information input device 15 so that the steering angle of the vehicle 1 does not exceed the steering angle according to the target travel path of the vehicle 1. The following describes an example in which the Cornering Power (CP) is used as information on the tires 7 and the steering angle of the vehicle 1 is controlled as the second control value.

CP is a value indicating the ratio of the steering angle to the lateral force generated during steering. The larger the CP, the higher the response to steering. Therefore, when the vehicle 1 is steered based on the same second control value for the tires 7 with small CP and the tires 7 with large CP, the amount of movement of the vehicle 1 becomes too large when the CP of the tires 7 is small and exceeds the amount of movement according to the target travel path of the vehicle (the amount of movement that can follow the target travel path), and this may cause the vehicle 1 to move too much. When the amount of movement of the vehicle 1 exceeds the steering angle according to the target travel path of the vehicle, some controls need to be applied to steer the vehicle 1 in the opposite direction. Such a large variation in the steering angle of the vehicle 1 relative to the steering angle according to the target travel path of the vehicle and repeated control of the steering of the vehicle 1 results in a large load on the tires 7.

Therefore, in this embodiment, the controller 10 controls the second control value so that the steering angle of the vehicle 1 does not exceed the steering angle according to the target travel path of the vehicle 1. For example, when the vehicle 1 travels along the same travel route, the controller 10 reduces the amount of movement of the vehicle 1 having CP greater than a predetermined threshold than the amount of movement of the vehicle 1 having CP equal or less than the predetermined threshold. In this way, it is less likely that the steering angle of the vehicle 1 will become too large and cause the vehicle to deviate from the target travel path of the vehicle when the CP is large. As a result, the variation of the steering angle of the vehicle 1 with respect to the steering angle according to the target travel path of the vehicle can be controlled, and the load growth on the tires 7 can also be suppressed.

In order to control the speed of vehicle 1 as described above, the following information, in addition to the RRC values, may be used as the information on the tires 7: uniformity, outside diameter, tan δ, and WGI, and the following information may be used as the information on the road surface of the course 200: road surface roughness, gradient in the direction of travel, and water depth. These, as well as the RRC values, are the information related to the performance of the tires 7 in the direction of travel of the vehicle 1, and the speed of vehicle 1 can be controlled by controlling these in the same manner as described using RRC values. Also, in order to control the steering angle of the vehicle 1 as described above, the following information, in addition to CP, may be used as the information on the tires 7: tire width and the vertical spring resistance coefficient, the following information may be used as the information on the road surface of the course 200: road surface roughness, lateral gradient, and water depth, and the information such as alignment may be used as the information on the vehicle 1. These, as well as CP, are the information related to the performance of the tires 7 in the direction that intersects the direction of travel of the vehicle 1, and the steering angle of the vehicle 1 can be controlled by controlling these in the same manner as described using CP. That is, the information on the tires 7 may include at least one of the tire width and the vertical spring resistance coefficient. The information on the road surface of the course 200 may include at least one of road surface roughness, lateral gradient, and water depth. Using this information, the vehicle 1 can be controlled based on a clearer understanding of the performance of the tires 7 and the condition of the road surface on the course 200, thus can suppress the load growth on tires in tire testing and improve the efficiency of tire testing.

As mentioned above, the vehicle 1 travels at a constant speed in the banked section 230. Therefore, the controller 10 keeps the target speed of vehicle 1 constant in the banked section 230. In this way, the speed of the vehicle in the banked section 230 is kept constant, thus the load on the tires 7 can be kept constant.

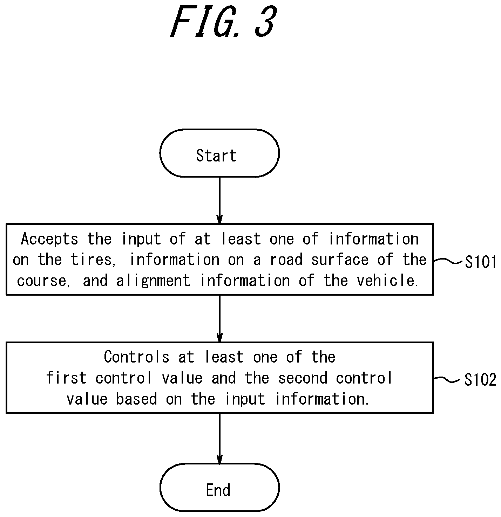

Figure 3 is a flowchart illustrating an example operation of the vehicle control device 100 and illustrating the vehicle control method in the vehicle control device 100.

The controller 10 accepts the input of at least one of information on the tires 7, information on a road surface of the course 200, and alignment information of the vehicle 1 (step S 101). Specifically, the controller 10 accepts the information on the tires 7, information on a road surface of the course 200, and alignment information of the vehicle 1, for example, from the information input device 15 via the communication device 8. The information may be input directly to the controller 15 from the information input device 15.

Next, the controller 10 controls at least one of the control value of speed of the vehicle 1 according to the target travel speed of the vehicle 1 (first control value) and the control value of the steering angle of the vehicle 1 according to the target travel path of the vehicle 1 (second control value) based on the input information (step S102). For example, the controller 10 controls the first control value so that the speed of the vehicle 1 does not exceed the target travel speed of the vehicle 1, based on the input information on the tires 7 (e.g., RRC value). Also, the controller 10 controls the second control value so that the steering angle of the vehicle 1 does not exceed the steering angle according to the target travel path of the vehicle 1, based on the input information on the tires 7 (e.g., WGI).

In this way, the driving of vehicle 1 can be controlled according to the performance of tires 7, the condition of the road surface of course 200, and the alignment information of the vehicle 1, thus the load growth on tires 7 in tire testing can be suppressed. As a result, it reduces the time and effort required to replace tires 7 due to wear and improves the efficiency of tire testing.

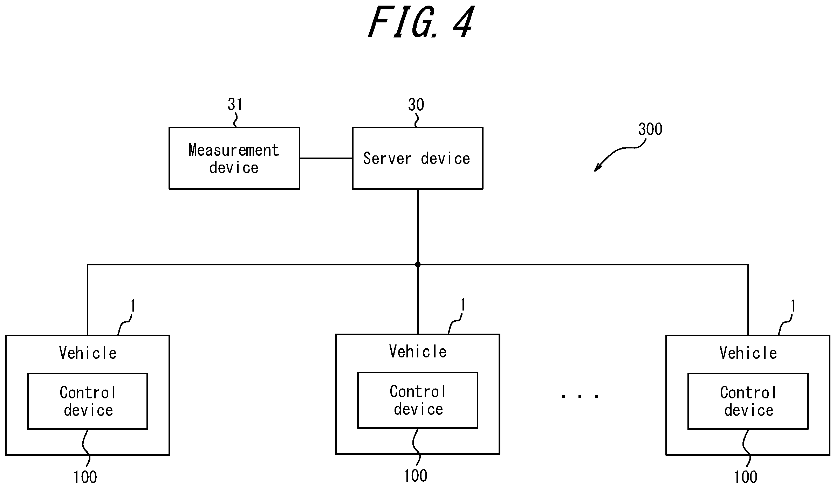

Figure 4 illustrates an example configuration of a tire testing system 300 that obtains test data for tires 7 mounted on the vehicle 1 driving on a course 200.

The tire testing system 300 illustrated in Figure 4 is equipped with a server device 30 and a measurement device 31. The server device 30 is an example of information input device 15.

The server device 30 is input at least one of information on the tires 7 mounted on the vehicle 1, information on a road surface of the course on which the vehicle 1 travels, and alignment information of the vehicle 1. This information is pre-measured and input into the server device 30 prior to the testing of the tires 7. The server device 30 is equipped with a communication interface for communicating with the communication device 8 installed in the vehicle 1. The server device 30 transmits at least one of the following input information to the vehicle 1 (vehicle control device 100) via the communication interface: information on the tires 7 mounted on the vehicle 1, information on the road surface of the course 200 on which the vehicle 1 travels, and alignment information of the vehicle 1. In other words, the server device 30 as the information input device 15 inputs at least one of the following information to the vehicle control device 100: information on the tires 7, information on the road surface of the course 200, and alignment information of the vehicle 1. The number of vehicles 1 (vehicle control devices 100) communicating with the server device 30 may be one, two or more.

The measurement device 31 acquires test data for the tires 7 mounted on the vehicle 1 driving on the course 200. In the case of a pass-by noise test, the measurement device 31 is, for example, a microphone. In this case, the measurement device 31 is installed at both ends of the road surface in the width direction of the test section 210 to measure the traveling noise of the vehicle 1. The measurement device 31 may output the acquired test data to server device 30.

Thus, the vehicle control device 100 of this embodiment comprises a controller 10 to which at least one of the information on the tires 7, information on the road surface of the course 200, and alignment information of the vehicle 1 is input, and at least one of the first control value, which is a control value of the speed of the vehicle 1 according to the target travel speed of the vehicle 1, and the second control value, which is a control value of the steering angle of the vehicle 1 according to the target travel path of the vehicle, based on the input information.

Also, the method for controlling the vehicle of this embodiment comprises the steps of accepting input of at least one of information on the tires 7, information on the road surface of the course 200, and alignment information of the vehicle 1, and controlling at least one of the first control value, which is a control value of the speed of the vehicle 1 according to a target travel speed of the vehicle 1, and a second control value, which is a control value of steering angle of the vehicle 1 according to a target travel path of the vehicle 1, based on the input information.

The tire testing system 300 of this embodiment comprises a vehicle control device 100 for controlling a vehicle 1 equipped with tires 7 and driving automatically on a course 200, and an information input device 15 for inputting at least one of information on the tires 7, information on the road surface of the course 200, and alignment information of the vehicle 1, to the vehicle control device 100. The vehicle control device 100 is input at least one of the following information from the information input device 15: information on the tires 7, information on the road surface of the course 200, and alignment information of the vehicle 1. The vehicle control device 100 controls at least one of the first control value, which is the control value of the speed of the vehicle 1 according to the target travel speed of the vehicle 1, and the second control value, which is the control value of the steering angle of the vehicle 1 according to the target travel path of the vehicle 1, based on the input information.

Therefore, it is possible to control the driving of vehicle 1 according to the performance of tire 7, the condition of the road surface of the course 200, and the alignment information of vehicle 1, thus can suppress the load growth on tires 7 in tire testing. As a result, it reduces the time and effort required to replace tires 7 due to wear and improves the efficiency of tire testing.

The vehicle control device 100, vehicle control method, and tire testing system 300 of this disclosure are not limited to the specific configurations illustrated in the embodiments described above, and various variations and changes are possible without departing from the scope of the claims.

### REFERENCE SIGNS LIST

1: Vehicle
2: Engine (power source)
3: Power transmission device
4: Steering device
5: Braking device
7: Tires
8: Communication device
9: On-board sensors
10: Controller
11: First battery (first power source)
12: Second battery (second power source)
13: Automatic driving processing unit
14: Fixed-point sensors
15: Information input device
30: Server device (information input device)
31: Measurement device
100: Vehicle control device
200: Course
200a, 200b: Straight track
200c, 200d: Curved track
210: Test section
220: Adjustment section
230: Banked section
240: Acceleration section
300: Tire testing system

## Claims

1. A vehicle control device for controlling a vehicle equipped with tires and driving automatically on a course, comprising
a controller to which at least one of information on the tires, information on a road surface of the course, and alignment information of the vehicle is input, and controls at least one of a first control value, which is a control value of speed of the vehicle according to a target travel speed of the vehicle, and a second control value, which is a control value of steering angle of the vehicle according to a target travel path of the vehicle, based on the input information.

2. The vehicle control device according to claim 1, wherein
the controller controls the first control value so that the speed of the vehicle does not exceed the target travel speed of the vehicle and/or the second control value so that the steering angle of the vehicle does not exceed the steering angle according to the target travel path of the vehicle.

3. The vehicle control device according to claim 1 or 2, wherein
the information on the tire includes at least one of the following: a rolling resistance coefficient (RRC) value of the tire, uniformity, outer diameter of the tire, tan δ of tread rubber of the tire, width of the tire, vertical spring coefficient of the tire, cornering power value of the tire, and WGI (Wet Grip Index),
the information on the road surface of the course includes at least one of the following: road surface roughness, gradient in the direction of travel, lateral gradient, and water depth, of the course.

4. The vehicle control device according to any one of claims 1 to 3, wherein
the course includes a banked section that has a curve shape, and the road surface thereof slopes from the inner circumference to the outer circumference of the curve,
the controller keeps the target travel speed of the vehicle constant in the banked section.

5. A vehicle control method for controlling a vehicle equipped with tires and driving automatically on a course, comprising
accepting input of at least one of information on the tires, information on a road surface of the course, and alignment information of the vehicle, and
controlling at least one of a first control value, which is a control value of speed of the vehicle according to a target travel speed of the vehicle, and a second control value, which is a control value of steering angle of the vehicle according to a target travel path of the vehicle, based on the input information.

6. A tire testing system comprising a vehicle control device for controlling a vehicle equipped with tires and driving automatically on a course, and an information input device for inputting at least one of information on the tires, information on a road surface of the course, and alignment information of the vehicle, to the vehicle control device,
the vehicle control device comprises
a controller to which at least one of information on the tires, information on a road surface of the course, and alignment information of the vehicle is input from the information input device, and controls at least one of a first control value, which is a control value of speed of the vehicle according to a target travel speed of the vehicle, and a second control value, which is a control value of steering angle of the vehicle according to a target travel path of the vehicle, based on the input information.
